# EUROPÄISCHE PATENTSCHRIFT

(11) **EP 0 406 780 B1**
(45) Veröffentlichungstag und Bekanntmachung des Hinweises auf die Patenterteilung: **20.12.1995**
(21) Anmeldenummer: 90112625.0
(22) Anmeldetag: 03.07.1990
(51) Int. Cl.: H04M 11/00, H04M 1/27

(54) **Bürokommunikationssystem zur Übertragung von Nachrichten- und /oder Bildinformationen über ein Nachrichtennetz für vermittelte Verbindungen**
Office communication system for transmitting data and/or image information via a switched network
Système de communication de bureau pour transmettre des informations de données et/ou d'image via un réseau commuté

(30) Priorität: 04.07.1989 DE 3921943
(43) Veröffentlichungstag der Anmeldung: 09.01.1991
(73) Patentinhaber: Grundig E.M.V. Elektro-Mechanische Versuchsanstalt Max Grundig GmbH & Co. KG, 90762 Fürth (DE)
(72) Erfinder: Schröder, Günter, Grundig E.M.V., Max Grundig, D-90762 Fürth (DE)

(56) Entgegenhaltungen:
- EP-A- 0 150 341
- DE-A- 3 613 443
- HASLER MITTEILLUNGEN, Bd. 46, Nr. 1, April 1987, Bern, CH, SS. 9-16; C. GEORGES et al.: 'Fernschreiber der Easyline-Familie'

## Beschreibung

Die Erfindung betrifft ein Bürokommunikationssystem zur Übertragung von Nachrichten- und/oder Bildinformationen über ein Nachrichtennetz für vermittelte Verbindungen gemäß dem Oberbegriff des Patentanspruchs 1.

In allen Wirtschaftsbereichen, vor allen Dingen im Bürobereich und in der Verwaltung, werden Textinformationen und neuerdings auch Bildinformationen erfaßt, bearbeitet, archiviert und zu einem Empfänger übertragen. Die stetige Weiterentwicklung der Technik und verbesserte Technologien ermöglichen es, daß die Bürokommunikationssysteme im Funktions- und Leistungsumfang immer umfangreicher geworden sind. Moderne Bürokommunikationssysteme sind dadurch in allen Bürobereichen zu einem wichtigen Hilfsmittel beim Abwickeln der vielfältigen und unterschiedlichen Aufgaben geworden.

Durch die Konfiguration von Mehrplatzsystemen und deren Einbindung in private, lokale und öffentliche Kommunikationsnetze ist der Kommunikationsprozess immer komplizierter geworden. Die Netzanschlüsse der Bürokommunikationssysteme ermöglichen den Informationsaustausch, insbesondere den papierlosen Transport von Nachrichten, Informationen und Dokumenten, mit gleichen und/oder unterschiedlichen Textverarbeitungssystemen, Ablagesystemen, Rechnern usw. über verschiedene Nachrichtennetze für vermittelte Verbindungen. Beispielsweise sind über die Netzanschlüsse die Bürokommunikationssysteme auch mit Datenverarbeitungsanlagen verbindbar, so daß eine Integrationsmöglichkeit von Text- und Datenverarbeitung und auch eine Einbindung in ein integriertes Digitalnetz (IDN) oder in ein diensteintegrierendes Digitalnetz (ISDN) gegeben ist. Moderne Bürokommunikationssysteme können dem Benutzer zwar die Arbeit erleichtern, erfordern jedoch bei der Benutzung spezielle Kenntnisse und viel Erfahrung. Dies gilt besonders für die ständig wachsenden Kommunikationsaufgaben, z.B. im Büro und in der Verwaltung, die Funktionsvielfalt und die neuen Anwendungsmöglichkeiten.

Aus der DE-PS 29 51 550 ist eine Anordnung zur Ferneinschaltung und Fernabschaltung von elektrischen Geräteeinheiten, insbesondere Rechenanlagen, bekannt. Eine Zentralstation ist über eine Standard-Schnittstellenübertragungssteuerung, ein Modem und eine Standard-Fernmeldeleitung und/oder Standard-Datenleitung mit den Außenstationen zur Datenfernübertragung verbindbar. Hierzu wird beispielsweise von einer automatischen Wähleinrichtung des Zentralrechners eine Verbindung zum Modem der Außenstationen aufgebaut. Ist die Verbindung zwischen den beiden Modems hergestellt, und ist in der Zentralstation vom Modem der Außenstation ein Bestätigungssignal empfangen worden, so werden vom Zentralrechner digitale Steuersignale und Nachrichten abgegeben, welche zu einer in der Außenstation nach dem Modem angeordneten, ferngesteuerten Stromversorgungseinrichtung gelangen. Die Zentralstation erzeugt und sendet dabei eine sich selbst identifizierende und die einzuschaltende Geräteeinheit kennzeichnende codierte Nachricht (Zustandsmeldungsaufforderung) aus. Zur Überprüfung der Verfügbarkeit der Geräteeinheiten muß die Zustandsrückmeldung bestätigt werden, wozu die von der Zentralstation an die Außenstation gesendete Nachricht in der Außenstation einem Zeitgeber zugeführt wird. Der Zeitgeber trennt die Verbindung zwischen Außenstation und Zentralstation, wenn nicht innerhalb der vorgegebenen Zeitspanne die Verfügbarkeit feststellbar ist. Hierzu enthält die Außenstation einen eine vorgegebene Signalfolge (Nachricht) erzeugenden, programmierbaren Festwertspeicher, sowie einen Komparator der die empfangene codierte Signalfolge (Nachricht) mit jener des Festwertspeichers vergleicht. Ist innerhalb des vorgegebenen Zeitintervalls von beispielsweise 100 ms eine Übereinstimmung bei allen Zeichen feststellbar, so wird die Stromversorgungseinrichtung der Außenstation eingeschaltet.

Mit einer solchen Anordnung ist es möglich, die auf Magnetband, Magnetplatte, Lochstreifen oder -karten, Floppydisk usw. aufgezeichneten Daten dann zu übertragen - z.B. in der Nacht oder an den Wochenenden - wenn die Verkehrsbelastung der Nachrichtennetze nicht so hoch ist und die Gebühren relativ niedrig sind. Weiterhin werden die Rechenanlagen, bzw. Geräteeinheiten, in den Außenstationen nur dann eingeschaltet, wenn eine Datenfernübertragung stattfinden soll.

Außerdem ist aus der DE-OS 37 21 047 ein Kommunikationssteuerverfahren bekannt, bei dem bei einem ersten Verfahrensschritt eine Verbindung über das öffentliche Fernsprechnetz zwischen einer rufenden Station und einer gerufenen Station hergestellt wird. Bei einem zweiten Verfahrensschritt wird der Übertragungsmode ausgewählt, um eine Übertragung von Nachrichten zwischen Telefonapparaten, Teletex-Geräten, Personal-Computern, Faksimile-Geräten oder ähnlichem zu ermöglichen. Das Verbund-Kommunikationsendgerät enthält unter anderem eine Systemsteuereinheit, welche den Betrieb des gesamten Verbund-Kommunikationsendgeräts steuert und welche verschiedene Kommunikations- und Übermittlungsfunktionen, bzw. verschiedene Datenverarbeitungsoperationen abwickelt. Weiterhin ist ein Coder/Decoder vorgesehen, welche eine Datenreduktion bzw. Datenexpansion der Bildinformationen vor der Übertragung bzw. beim Empfang an einer Bestimmungsstation vornehmen. Außerdem weist das Verbund-Kommunikationsendgerät eine Kommunikationssteuereinheit auf, welche die Kommunikations-Prozedurschritte in verschiedenen Kommunikationsmoden, wie beispielsweise eine Faksimile-, eine Teletex- und eine PC-Kommunikation, durchführen kann. Ein Modem moduliert ein zu übertragendes Signal, demoduliert ein empfangenes Signal für eine weitere Verarbeitung und führt eine Analog-Digital- bzw. Digital-Analog-Umsetzung durch. Weiterhin kann das Modem in verschiedenen Moden betrieben werden, welche für die Anzahl von verschiedenen Übertragungsfunktionen erforderlich sind.

Schließlich ist aus der DE-PS 21 59 848 ein Textverarbeitungssystem mit einer Anzahl peripherer Diktateingabestellen bekannt, bei dem zur Diktatübertragung die Diktateingabestellen über eine Vermittlungseinrichtung mit einem zentralen Schreibbüro in Verbindung stehen. Im zentralen Schreibbüro werden die aufgezeichneten Diktate abgehört und in geschriebenen Text umgesetzt. Um die von verschiedenen Diktateingabestellen stammenden Diktate bzw. die von der gleichen Diktateingabestelle kommenden verschiedenen Diktatabschnitte zu kennzeichnen, weist jede Diktateingabestelle einen Kennungsgeber auf, der jeden eingegebenen Diktatabschnitt eines abschnittsweise diktierten Diktats mit einer Kennung versieht. In der zentralen Schreibstelle erfolgt dann das Sortieren und Zusammenfügen der einzelnen Textabschnitte zum vollständigen Text anhand der den einzelnen Diktatabschnitten zugeordneten Kennungen. Um eine unmittelbare Überprüfung des in Text umgesetzten und abgespeicherten Diktats an der Diktateingabestelle zu ermöglichen, weist jede Diktateingabestelle einen Anzeigebildschirm auf, der eine Sichtanzeige der in den Textseitenspeichern gespeicherten Textabschnitte gestattet. Die Nachrichtenübertragung von Diktat und Text zwischen Diktateingabestellen und zentraler Schreibanlage erfolgt in dem speziell ausgestalteten privaten Nachrichtennetz.

Mit den verschiedenen Bürokommunikationssystemen bzw. Textverarbeitungssystemen ist es möglich, zu einem beliebigen Zeitpunkt eine Verbindung über ein Nachrichtennetz zu einer bestimmten Teilnehmerstation bzw. einem bestimmten Gerät aufzubauen und eine Datenfernübertragung einzuleiten bzw. zu steuern. Diese Systeme sind in der Regel jedoch ganz speziell an die Anforderungen der Anwender angepaßt, die hierzu erforderlichen Steuereinrichtungen sind in der Regel sehr aufwendig und bieten dennoch keinen hohen Benutzerkomfort. In der Regel muß die Datenfernübertragung von einer Bedienperson eingeleitet, überwacht und gesteuert werden.

Weiterhin ist aus der Zeitschrift "Hasler-Mitteilungen" Bd. 46, Nr. 1, April 1987, Seiten 9 bis 16 ein Fernschreibersystem bekannt, bei dem durch Verwendung von Textspeicher und Sendeautomat, die im Sendespeicher des Sendeautomaten zwischengespeicherte Nachricht automatisch übertragen wird.

Schließlich ist aus der EP-A-0 150 341 ein Verfahren und eine Anordnung zum selbsttätigen Protokollieren von Sendeaufträgen für zu übertragende Texte bekannt, bei dem die Texte und die zugehörigen Sendeaufträge in einem internen Speicher der Textstation zwischengespeichert werden. Bei einer erfolgreichen Ausführung des Sendeauftrags werden dieser und der zugehörige Text an einem Drucker ausgegeben und gleichzeitig im internen Speicher gelöscht.

Im Hinblick darauf ist es anzustreben, ein Bürokommunikationssystem oder Textverarbeitungssystem derart auszugestalten, daß sich der Benutzer auch ohne spezielle Kenntnisse die von der Technik bereitgestellten Möglichkeiten für seine Aufgaben und Anwendungen nutzbar machen kann. Dies ist dann sichergestellt, wenn die verschiedenen Funktionen und hierzu erforderlichen Eingabebefehle entweder dem Benutzer an sich bekannt sind oder automatisch ablaufen, z.B. die erforderlichen Steuerbefehle von einem Mikroprozessor automatisch erzeugt werden. Hinsichtlich des Kommunikationsprozesses ist es heute besonders wichtig, Informationen schnell zu erhalten und/oder weiterzureichen, auszuwerten und umzusetzen.

Der Erfindung liegt die Aufgabe zugrunde, ein Bürokommunikationssystem derart auszugestalten, daß die Übertragung gespeicherter Nachrichten, z.B. Daten, Bildinformationen usw. zu einem beliebigen Gerät und zu einem beliebigen Zeitpunkt ermöglicht wird und daß der Kommunikationsprozess keine speziellen Kenntnisse vom Benutzer erfordert.

Diese Aufgabe wird bei einem gattungsgemäßen Bürokommunikationssystem durch die kennzeichnenden Merkmale des Patentanspruchs 1 gelöst.

Das erfindungsgemäße Bürokommunikationssystem weist den Vorteil auf, daß die verschiedenen Funktionen und Eingabebefehle auf solche Funktionen und Eingabebefehle zurückführbar sind, welche dem Benutzer bekannt sind, wodurch auch der Kommunikationsprozess für den Benutzer überschaubar ist. Weiterhin weist das erfindungsgemäße Bürokommunikationssystem den Vorteil auf, daß die gespeicherten Nachrichten zu einem kostengünstigen Zeitpunkt automatisch und schnell weitergereicht werden. Dies wird dadurch erreicht, daß die für die automatische Datenfernübertragung vom Benutzer einzugebenden Steuerbefehle, beispielsweise auf für die Bedienung von Videorecordern oder Komfortfernsprechapparaten mit automatischer Wähleinrichtung bekannte Befehle und Funktionen zurückgeführt sind. Dadurch ist sichergestellt, daß trotz der Funktionsvielfalt die Akzeptanz der Benutzer, d.h. die Nutzung der vom erfindungsgemäßen Bürokommunikationssystem bereitgestellten Möglichkeiten für ihren Aufgabenbereich, gegeben ist.

Zur Datenfernübertragung mit niedrigen Übertragungsgeschwindigkeiten, z.B. 300 Baud, kann beispielsweise eine in jedem Büro vorhandene Einrichtung, nämlich der Fernsprechapparat, genutzt werden. Die elektrischen Signale des Bürokommunikationssystems werden dann von einem Akustik-Koppler in akustische Signale umgewandelt und über das öffentliche Fernsprechnetz zum Empfänger übertragen. Der Empfänger kann zur Wandlung der Daten wieder in elektrische Signale, entweder ebenfalls einen Akustik-Koppler oder ein Modem aufweisen.

Der Verbindungsaufbau wird von einer automatischen Wähleinrichtung gesteuert, welche dem Benutzer beispielsweise aus der Anwendung bei einem Komfort-Fernsprechapparat oder einem modernen Anrufbeantworter bekannt ist.

Das erfindungsgemäße Bürokommunikationssystem weist umfassende und vielfältige Anwendungsmöglichkeiten in allen Bereich von Wirtschaft, Industrie, Technik, Handel, Dienstleistung, Behörden und Verwaltung auf. Es ermöglicht die Übertragung sowohl des internen und/oder externen Schriftverkehrs als auch die Übertragung qualitativ hochwertiger Dokumente, Informationsschriften usw.. Solches bei der Textbe- und Dokumentverarbeitung entstehendes Schriftgut sind beispielsweise Dokumente, welche sowohl Text, Graphik, Tabellen, Freihand-Zeichnungen und Bilder aufweisen können. Mit einem Scanner kann dieses Schriftgut abgetastet, aufbereitet und zur Abspeicherung in einen Massenspeicher eingeschrieben werden. Die Verwaltung des Massenspeichers kann nach sowohl zentrale als auch dezentrale Ablagestrukturen berücksichtigende Gesichtspunkten organisiert sein.

Das erfindungsgemäße Bürokommunikationssystem bietet eine Vielzahl von Ausbau- und Erweiterungsmöglichkeiten. Über die Schnittstelleneinrichtungen, welche beispielsweise eine Hochgeschwindigkeits-Serienschnittstelle, eine V.24-Schnittstelle, eine X.21-Schnittstelle enthalten, wird der Zugriff auf zahlreiche und in verschiedener Weise ausgestaltete Bürogeräte bzw. deren Massenspeicher ermöglicht. Solche Bürogeräte sind beispielsweise Datenverarbeitungssysteme mit Floppy-Disk, optischer Speicherplatte oder Festplatte; Drucker; Plotter; Cassettenrecorder; Streamer; Rechenanlagen; Bildschirmschreibmaschinen; Desktop-Publishing-Systeme usw..

Die Ausführungsform des Bürokommunikationssystems nach Anspruch 1 erlaubt durch den Einsatz des Videorecorders eine wirtschaftliche Gestaltung des Kommunikationskonzepts und erfordert zudem vom Benutzer für den Kommunikationsprozess keine speziellen Kenntnisse der Netztechnik, Prozeduren usw.. Das Verfahren zur Programmierung für den zeitversetzten Informationsaustausch erfolgt in gleicher Weise wie die Programmierung eines Empfängers, insbesondere eines Videorecorders, auf Empfang und/oder Aufzeichnung bestimmter Sendungen. Zur Erleichterung der Programmierung können die in einem Speicher der Wähleinrichtung abgelegten Rufnummern sowie die vom Benutzer eingegebenen Sendezeiten an einem Sichtgerät des Bürokommunikationssystems angezeigt werden.

Zur Vernetzung unterschiedlicher Datenverarbeitungs- und Bürosysteme ist bei der Steuerung des Informationsaustausches neben der Kompatibilität zu den unterschiedlichsten Netzarchitekturen, vor allem der Zugriff zu den im Massenspeicher befindlichen Nachrichten- und/oder Bildinformationen zu berücksichtigen. Ein einfacher Zugriff und die Überprüfung der Zugriffsberechtigung wird durch die Ausführungsformen des Bürokommunikationssystems nach den Patentansprüchen 2, 3 und 4 sichergestellt.

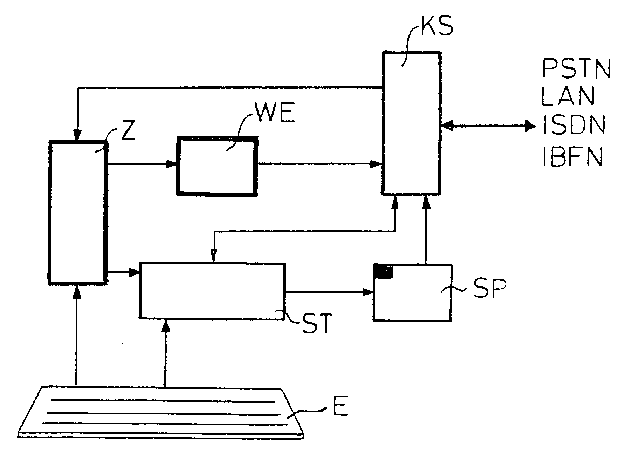

Die Erfindung wird im folgenden anhand einer in der Zeichnung dargestellten Ausführungsform näher beschrieben und erläutert. Auch wenn im folgenden die Erfindung anhand der Benutzung bei einem Ablagesystem beschrieben wird, so ist der Einsatz bei allen Systemen möglich, z.B. Textverarbeitungssystem, Rechner, Desktop-Publishing-System, welche einen Massenspeicher für Nachrichten- und/oder Bildinformationen aufweisen.

Aus der nicht vorveröffentlichten deutschen Patentanmeldung P 39 07 487 ist eine Vorrichtung zum Speichern und Wiedergewinnen von Bildinformationen bekannt, bei der die Bildinformationen in einer Datei gespeichert sind und mittels gespeicherter Suchinformationen wiedergewonnen werden. Die Vorrichtung enthält ebenso wie das erfindungsgemäße Bürokommunikationssystem eine Steuereinrichtung ST mit Programmspeicher, eine Abtasteinrichtung (Scanner), einen Massenspeicher SP, ein Sichtgerät, einen Drucker sowie eine Eingabeeinrichtung E. Die mit Bezugszeichen versehenen Einrichtungen sind in der Zeichnung dargestellt.

Die vom Scanner abgetasteten Dokumente werden im Massenspeicher SP in der Reihenfolge ihrer Eingabe gespeichert, wobei die Speicherkapazität des Magnetbandes ca. 1.200 Seiten DIN-A4 pro Stunde Laufzeit bei einer Auflösung von 200 dpi beträgt. Eine Inhaltsangabe der auf dem Magnetband abgespeicherten Dokumente befindet sich im File-Vorspann des Magnetbandes. Das Sichtgerät erfüllt zwei Aufgaben: es zeigt das Bild einer eingelesenen bzw. archivierten Seite eines Dokuments und dient zur Darstellung von Dialogmenüs, von sortierten Dokumentenlisten, von Störungsmeldungen und von Help-Menüs.

Der Benutzer gibt mit der Eingabeeinrichtung E Steuerbefehle ein, welche von der Steuereinrichtung ST ausgewertet werden. Diese veranlaßt, daß die einzelnen Einrichtungen entsprechende Funktionen ausführen. Gibt beispielsweise der Benutzer den Steuerbefehl "Einschreiben" an der Eingabeeinrichtung E ein, so wird diese Funktion "Einschreiben" im Zusammenspiel von Steuereinrichtung St und Abtasteinrichtung ausgeführt. In entsprechender Weise erfolgt die Funktion "Speichern" mittels Steuereinrichtung ST und Massenspeicher SP, die Funktion "Suchen" mittels Suchinformations-Speicher und Steuereinrichtung ST, die Funktion "Zeigen" mittels Steuereinrichtung ST und Sichtgerät, die Funktion "Drucken" mittels Steuereinrichtung ST und Drucker usw..

Eine weitere Aufgabe der Steuereinrichtung ST liegt darin, Bildinformationen aus einer Mikrofilm- und/oder Mikrofiche-Datei wiederzugewinnen. Die Suchinformationen sind für die auf dem Magnetband befindliche Datei bzw. Mikrofilm- und/oder Mikrofiche-Datei im gemeinsamen Suchinformationsspeicher enthalten. Bei der Archivierung der Dokumente in der Mikrofilm- oder Mikrofiche-Datei legt der Benutzer zu jeder auf dem Sichtgerät dargestellten Bildinformation die einzelnen Suchbegriffe fest, welche zusammen mit der zugehörigen Adresse (z.B. X-Y-Koordinaten beim Mikrofiche) in den Suchinformationsspeicher eingelesen werden.

Beim erfindungsgemäßen Bürokommunikationssystem ist für die Übertragung von Nachrichten- und/oder Bildinformationen über ein Nachrichtennetz für vermittelte Verbindungen zusätzlich eine automatische Wähleinrichtung WE, eine Zeitschalteinrichtung Z mit Kalenderfunktion und eine Kommunikationsschnittstelleneinrichtung KS vorgesehen. Die automatische Wähleinrichtung WE ist mit der Zeitschalteinrichtung Z verbunden. Diese erzeugt zu einem bestimmten Zeitpunkt ein Steuersignal, welches die automatische Wähleinrichtung WE zur Herstellung einer Verbindung über das Nachrichtennetz veranlaßt. Ist die Verbindung hergestellt, so steuert die Steuereinrichtung ST das Auslesen der gespeicherten Nachrichten- und/oder Bildinformationen aus dem Massenspeicher SP. Über die mit dem Massenspeicher SP verbundene Kommunikationsschnittstelleneinrichtung KS erfolgt die Übertragung von Nachrichten- und/oder Bildinformationen über das Nachrichtennetz. Erfolgt der Informationsaustausch im ISDN, so können über die Kommunikationsschnittstelleneinrichtung KS Wählverbindungen der Gruppe 1 sowie Festverbindungen der Guppen 2 und 3 genutzt werden. Die Kommunikationsschnittstelleneinrichtung KS kann Basis- und Primärmultiplexanschlüsse aufweisen, wobei für alle Dienste in der Regel eine einheitliche Rufnummer vorgesehen ist.

Für Wählverbindungen der Gruppe 1, d.h. leitungsvermittelte, analoge und digitale Verbindungen über Telefon- oder Universalanschlüsse (ISDN) werden die Verkehrsgebühren bzw. nutzungsabhängigen Gebühren nach Verbindungsdauer, Tageszeit, Wochentag und Tarifzone ermittelt.

IM ISDN ist auch die Kombination mehrerer Dienste oder Kommunikationsarten zu einem Mischkommunikationsdienst möglich. Ein Beispiel für eine solche Mischkommunikation ist die Text- und Bildübermittlung mit einer Bitrate von 64 kbit/s oder die Sprach- und Bildübermittlung mit einer Bitrate von 2 x 64 kbit/s. Ein Beispiel für die Text- und Bildübermittlung ist die Kombination von Teletex und Telefax, wodurch das originalgetreue Übermitteln von Dokumenten in Bild und Schrift ermöglicht wird. Ein Beispiel für die Sprach- und Bildübermittlung ist das Bildtelefon, bei dem das gesprochene Wort durch das gleichzeitige Übertragen eines Bilds unterstützt wird. Das erfindungsgemäße Bürokommunikationssystem ist unter Berücksichtung der Netzarchitektur auf OSI-Standard ausgelegt. Es ist einfach an die entsprechende Ausbaustufe des Kommunikationsnetzes anpaßbar, wobei auch die Einbindung in an ein Breitbandnetz IBFN mit beispielsweise einer Bitrate von 140 Mbit/s möglich ist.

Die Abspeicherung der Nachrichten und/oder Bildinformationen erfolgt beim erfindungsgemäßen Bürokommunikationssystem in einem Videorecorder. Die Steuereinrichtung ST ordnet bei der Abspeicherung von Nachrichten und/oder Bildinformationen neben der Suchinformation auch eine den Videorecorder identifizierende Kennung zu. Diese Kennung wird beim Informationsaustausch automatisch zur gerufenen Teilnehmereinrichtung mitübertragen, so daß eine Herkunftsbestimmung der empfangenen Informationen möglich ist. Der Verbindungsaufbau und die Nachrichtenübertragung über das PSTN kann entsprechend dem Telefax-Dienst vorgenommen werden.

Der Informationsaustausch kann auch von einer fernen Teilnehmereinrichtung eingeleitet werden, wozu die Kommunikationsschnittstelleneinrichtung KS mit der Zeitschalteinrichtung Z verbunden ist. Die Steuereinrichtung ST überprüft anhand der empfangenen Kennung, ob die rufende Teilnehmereinrichtung zum Zugriff auf die im Massenspeicher SP gespeicherten Nachrichten- und/oder Bildinformationen berechtigt ist. Erst danach veranlaßt die Steuereinrichtung ST das Auslesen der im Massenspeicher SP enthaltenen Informationen.

## Patentansprüche

1. Bürokommunikationssystem zur Übertragung von Nachrichten- und/oder Bildinformationen über ein Nachrichtennetz für vermittelte Verbindungen zwischen den Endeinrichtungen des Nachrichtennetzes, insbesondere zwischen Textverarbeitungssystemen, Rechnern, Ablagesystemen oder Desktop-Publishing-Systemen mit Massenspeicher (SP) für Nachrichten- und/oder Bildinformationen,
- wobei das Bürokommunikationssystem zur Datenfernübertragung von aus dem Massenspeicher zwischengespeicherter Nachrichten über mindestens eine Kommunikationsschnittstelleneinrichtung (KS) mit dem Nachrichtennetz in Verbindung steht,
- wobei eine automatische Wähleinrichtung (WE) vorgesehen ist, welche mit einer vom Benutzer an einer Eingabeeinrichtung (E) einstellbaren Zeitschalteinrichtung (Z) mit Kalenderfunktion zur Eingabe von Sendeaufträgen verbunden ist,
- wobei die Zeitschalteinrichtung (Z) zu einem bestimmten Zeitpunkt ein Steuersignal erzeugt, welches eine mit der Zeitschalteinrichtung (Z) verbundene Steuereinrichtung (ST) zum Auslesen der zwischengespeicherten Nachrichten entsprechend einem zwischengespeicherten Sendeauftrag und die automatische Wähleinrichtung (WE) zur Herstellung einer Verbindung über das Nachrichtennetz veranlaßt,
**dadurch gekennzeichnet**, daß im Bürokommunikationssystem als Massenspeicher (SP) ein Videorecorder angeordnet ist, welcher mit der Wähleinrichtung (WE) und mit der Kommunikationsschnittstelleneinrichtung (KS) verbunden ist und daß die Steuereinrichtung (ST) des Videorecorders die Zeitschalt- und Wiedergabefunktion der im Massenspeicher (SP) enthaltenen Informationen steuert.

2. Bürokommunikationssystem nach Anspruch 1,
**dadurch gekennzeichnet**, daß die Steuereinrichtung (ST) bei der Speicherung von Nachrichten- und/oder Bildinformationen, diesen eine Suchinformation und eine den Videorecorder identifizierende Kennung zuordnet, welche beim Informationsaustausch mitübertragen wird.

3. Bürokommunikationssystem nach Anspruch 2,
**dadurch gekennzeichnet**, daß die Steuereinrichtung (ST) anhand der Kennung überprüft, ob die rufende Endeinrichtung zum Zugriff auf die im Massenspeicher (SP) gespeicherten Nachrichten- und/oder Bildinformationen berechtigt ist.

4. Bürokommunikationssystem nach einem oder mehreren der Ansprüche 1 bis 3,
**dadurch gekennzeichnet**, daß die Kommunikationsschnittstelleneinrichtung (KS) mit der Zeitschalteinrichtung (Z) verbunden ist und daß die Zeitschalteinrichtung (Z) ein Steuersignal erzeugt, welches zur Aktivierung der Steuereinrichtung (ST) dient.

## Claims

1. Office communication system for the transmission of message and/or image data via a communication network for switched connections between the terminals of the communication network, in particular between word processing systems, computers, filing systems or desktop publishing systems with bulk storage unit (SP) for message and/or image data,
- whereby, for the remote data transmission of messages temporarily stored in the bulk storage unit, the office communication system is connected to the communication network via at least one communication interface device (KS),
- whereby, an automatic dialler (WE) is provided, which is connected to a time switch device (Z) having a calendar function, which is adjustable by the user at an input device (E) for the input of transmit instructions.
- whereby, at a specific time the time switch device (Z) generates a control signal which causes a control device (ST) connected to the time switch device (Z) to read out the temporarily stored messages according to a temporarily stored transmit instruction and causes the automatic dialler (WE) to establish a connection via the communication network,
**characterised in that** in the office communication system a video recorder is arranged as the bulk storage unit (SP), which video recorder is connected to the dialler (WE) and to the communication interface device (KS), and that the control device (ST) of the video recorder controls the time switch and playback function of the information contained in the bulk storage unit (SP).

2. Office communication system according to Claim 1, **characterised in that** during the storing of message and/or image data, the control device (ST) allocates search data and a code identifying the video recorder to this message and/or image data, which is also transmitted during the information exchange.

3. Office communication system according to Claim 2, **characterised in that** using the code, the control device (ST) checks whether the calling terminal has authorized access to the message and/or image data stored in the bulk storage unit (SP).

4. Office communication according to one or more of Claims 1 to 3, **characterised in that** the communication interface device (KS) is connected to the time switch device (Z), and that the time switch device (Z) generates a control signal which is used to activate the control device (ST).

## Revendications

1. Système de communication de bureau pour la transmission de données et/ou d'informations d'images par l'intermédiaire d'un réseau de transmission d'informations pour des liaisons commutées entre des systèmes de traitement de texte, des ordinateurs, des systèmes d'archivage ou des systèmes de (publication assistée par ordinateur comportant une mémoire de masse (SP) pour des informations de données et/ou des informations d'images, dans lequel
- le système de communication de bureau est relié, pour la télétransmission de données d'informations mémorisées temporairement à la mémoire de masse, au réseau de transmission d'informations, par l'intermédiaire d'au moins un dispositif d'interface de communication (KS),
- il est prévu un dispositif de sélection automatique (WE), qui est relié à un dispositif de commutation temporelle (Z), réglable par l'utilisateur dans un dispositif d'entrée (E) et possédant une fonction de calendrier pour l'introduction d'ordres d'émission,
- le dispositif de commutation temporelle (Z) produit, à l'instant déterminé, un signal de commande qui déclenche un dispositif de commande (ST) relié au dispositif de commutation temporelle (Z), pour qu'il lise les informations de données mémorisées temporairement, conformément à un ordre d'émission mémorisé temporairement et commande le dispositif de sélection automatique (WE) pour qu'il établisse une liaison par l'intermédiaire du réseau de transmission d'informations de données,
caractérisé en ce que dans le système de communication de bureau est disposé, en tant que mémoire de masse (SP), un enregistreur vidéo, qui est relié au dispositif de sélection (WE) et au dispositif d'interface de communication (KS), et que le dispositif de commande (ST) de l'enregistreur vidéo commande la fonction de commutation temporelle et de reproduction des informations contenues dans la mémoire de masse (SP).

2. Système de communication de bureau selon la revendication 1, caractérisé en ce que lors de la mémorisation d'informations de données et/ou d'informations d'images, le dispositif de commande (ST) associe à ces informations une information de recherche et une identification, qui identifie l'enregistreur vidéo et qui est transmise conjointement lors de l'échange d'informations.

3. Système de communication de bureau selon la revendication 2, caractérisé en ce que le dispositif de commande (ST) vérifie, sur la base de l'identification, si le dispositif terminal appelant est autorisé à avoir accès aux informations de données et/ou aux informations d'images mémorisées dans la mémoire de masse (SP).

4. Système de communication de bureau selon une ou plusieurs des revendications 1 à 3, caractérisé en ce que le dispositif d'interface de communication (KS) est relié au dispositif de commutation temporelle (Z) et que le dispositif de commutation temporelle (Z) produit un signal de commande, qui sert à activer le dispositif de commande (ST).
